# FASCICULE DE BREVET EUROPEEN

(11) **EP 1 248 086 B1**
(45) Date de publication et mention de la délivrance du brevet: **24.10.2012**
(21) Numéro de dépôt: 02290804.0
(22) Date de dépôt: 29.03.2002
(51) Int. Cl.: G01F 23/04, G01F 23/72

(54) **Dispositif de repérage du niveau d'un liquide**
Vorrichtung zur Feststellung eines Flüssigkeitsstandes
Liquid level detection device

(30) Priorité: 02.04.2001 FR 0104461
(43) Date de publication de la demande: 09.10.2002
(73) Titulaire: ALMA INGENIERIE, F-94470 Boissy-Saint-Leger (FR)
(72) Inventeur: Aubin, Claude Jean-Marie, 91540 Mennecy (FR); Bordreuil, Marc, 13090 Aix-en-Provence (FR)
(74) Mandataire: Jacobson, Claude

(56) Documents cités:
- WO-A-86/02444
- FR-A- 2 586 291
- US-A- 3 572 122
- US-A- 4 804 944

## Description

La présente invention concerne un dispositif de repérage du niveau d'un liquide contenu dans une citerne, du type comportant à la fois un module intérieur disposé à l'intérieur de la citerne, ledit module comprenant un tube de guidage agencé sur la face intérieure de la zone supérieure de la citerne, fermé à son extrémité inférieure et ouvert sur l'extérieur de la citerne à son extrémité supérieure, et un flotteur monté à translation libre sur le tube de guidage et muni de moyens adaptés pour fournir un signal représentatif de la position du flotteur le long du tube de guidage ; et des moyens de détection et d'analyse dudit signal.

De tels dispositifs s'utilisent couramment dans le domaine routier et ferroviaire, dans le cadre du transport de matières liquides, par exemple de carburants, par notamment des camions-citernes ou des wagons-citernes.

Ce type de dispositif sert à déterminer le volume de liquide transporté au moyen de barèmes ou de formules donnant la correspondance entre la hauteur au-dessus de la surface libre du liquide dans la citerne et le volume transporté, un barème étant établi au préalable pour chaque citerne ou chaque compartiment dans le cas de citernes à plusieurs compartiments indépendants.

Pour des raisons de sécurité et/ou de réglementation, il n'est pas toujours possible ou souhaitable d'ouvrir le couvercle de « trou d'homme » dont est équipé le sommet de la citerne, ce qui empêche l'utilisation classique d'un « sabre » ou pige millimétrique manoeuvré manuellement depuis le couvercle ouvert du trou d'homme.

Les dispositifs de repérage couramment employés dans de tels cas comportent une unité électronique agencée à l'intérieur de la citerne et destinée à détecter et à analyser, au moyen de montages électroniques complexes, un signal représentatif de la position du flotteur. Ce signal peut être fourni par un aimant, l'unité électronique agencée à l'intérieur de la citerne déterminant automatiquement la position du flotteur, et communiquant cette information à une unité d'affichage électronique extérieure.

Ces dispositifs sont chers, en raison de la nécessité d'utiliser un grand nombre de composants électroniques de précision et posent des problèmes de fiiabilité dans le temps. Ils sont de plus installés à demeure à l'intérieur de la citerne, ce qui pose des problèmes de maintenance et de coût puisqu'il est nécessaire de monter et d'entretenir autant de ces dispositifs qu'il y a de compartiments dans la citerne.

D'autres dispositifs utilisent des signaux lumineux pour repérer le niveau du liquide au moyen d'un endoscope coulissant dans le tube de guidage, ce dernier étant translucide, et éclairant un organe supplémentaire gradué installé à demeure dans chaque compartiment de la citerne. De la même façon, ces dispositifs sont chers, complexes à installer et peu fiables dans le temps, le tube ayant tendance à perdre sa transparence par exemple.

Un autre exemple d'un dispositif de repérage est fourni par US-A-3,572,122 qui divulgue les caractéristiques du préambule de la revendication 1. Ce dispositif prévoit d'introduire, depuis l'extérieur de la citerne dont on cherche à mesurer le niveau de liquide, une tige munie d'un aimant destiné à se verrouiller magnétiquement avec l'aimant d'un flotteur monté à libre translation sur un tube intérieur, dans lequel la tige est enfilée. À l'extérieur de la citerne, un guide d'introduction de cette tige est soudé à demeure sur une plaque boulonnée à la citerne, la mesure du niveau de liquide étant ainsi réalisée par rapport à ce guide non amovible par rapport à la citerne. Il en résulte que le dispositif de US-A-3,572,122 est à la fois encombrant, en particulier à l'extérieur de la citerne, ce qui le rend relativement onéreux, et peu précis, en raison des jeux de positionnement de ses aimants lors de leur verrouillage l'un à l'autre.

Le but de l'invention est de remédier aux inconvénients des dispositifs actuels précités, en proposant un dispositif pour repérer et mesurer rapidement le niveau du liquide dans une citerne, qui soit peu coûteux et pratique à utiliser, tout en étant précis.

A cet effet, l'invention a pour objet un dispositif de repérage tel que défini à la revendication 1.

D'autres caractéristiques de ce dispositif sont énoncées aux revendications dépendantes 2 à 14.

L'invention a également pour objet une citerne équipée d'un dispositif tel que décrit ci-dessus.

Suivant une autre caractéristique, cette citerne comporte plusieurs compartiments indépendants, et chaque compartiment est équipé d'un module intérieur, coopérant chacun avec le même module extérieur amovible

L'invention sera mieux comprise à la lecture de la description qui va suivre, donnée uniquement à titre d'exemple, et faite en se référant aux dessins annexés sur lesquels :
- la figure 1 est une vue schématique en coupe transversale d'une citerne équipée d'un dispositif de repérage et de mesure du niveau du liquide contenu à l'intérieur de cette citerne ;
- la figure 2 est une vue de dessus de la citerne de la figure 1, la partie du dispositif de repérage extérieur à la citerne n'étant pas représentée ;
- la figure 3 est une vue d'ensemble et partiellement en coupe du dispositif de repérage et de mesure selon l'invention ;
- la figure 4 est une vue en coupe montrant un élément du dispositif de la figure 3 à plus grande échelle ;
- la figure 5 est une vue extérieure montrant un autre élément du dispositif de la figure 3 à plus grande échelle ;
- la figure 6 est une vue de dessus de la figure 5 ;
- la figure 7 est un diagramme schématique sous forme de blocs illustrant la structure de fonctionnement du dispositif de la figure 3 ; et
- la figure 8 est une vue partiellement en coupe montrant un détail du dispositif de la figure 3 lors de son utilisation.

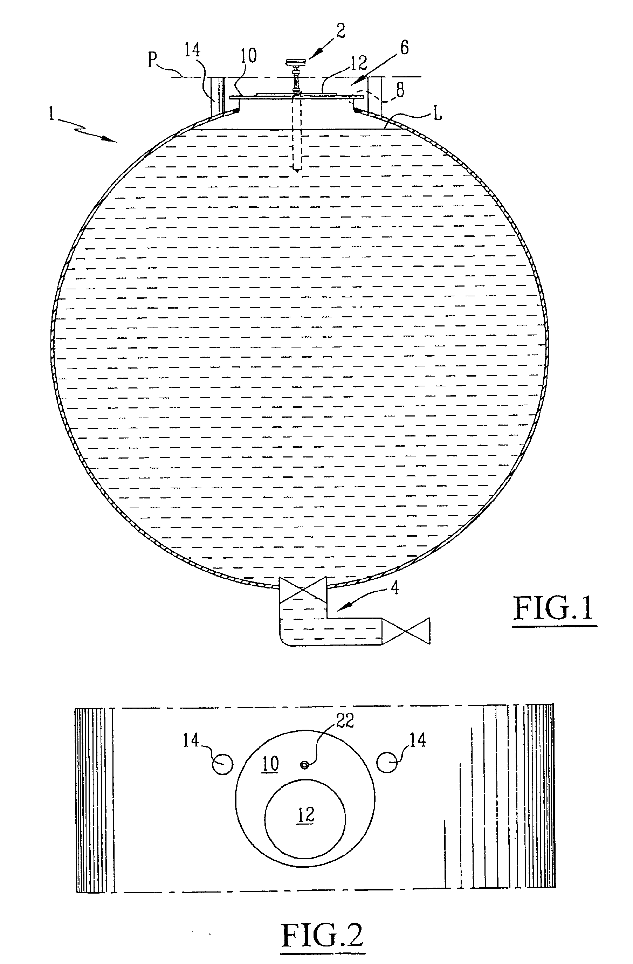

Sur la figure 1 est représentée schématiquement une citerne 1 munie d'un dispositif de repérage 2 du niveau d'un liquide L contenu dans la citerne 1. Le terme « citerne» désigne plus globalement un récipient utilisé pour le stockage ou bien pour le transport routier ou ferroviaire de produits liquides, au moyen d'un véhicule citerne de type camion-citerne ou wagon-citerne par exemple. Cette citerne 1 est par exemple utilisable pour le transport de composés organiques volatils (C.O.V.), tels que des carburants.

La citerne 1 comporte un dispositif 4 de vidange du liquide par gravité. La citerne comporte également un dôme 6 ou « coffre d'expansion » situé dans sa partie supérieure. Ce dôme 6 délimite la zone dans laquelle des hauteurs de liquide peuvent être repérées par le dispositif 2.

Ce dôme 6 délimite un trou d'homme 8 de forme cylindrique, comme il est connu dans la technique. Ce trou d'homme 8 est fermé, de façon étanche, à son extrémité supérieure par un plateau 10 équipé d'un couvercle articulé 12. A l'extérieur du plateau 10, la virole de la citerne 1 est pourvue de plots 14 disposés de part et d'autre du plateau et dont les surfaces supérieures définissent un plan de repérage P destiné à servir de repère normalisé pour la mesure de « la hauteur de creux » dans la citerne, c'est-à-dire la distance verticale entre le plan de repérage P et la surface libre du liquide à l'intérieur de la citerne.

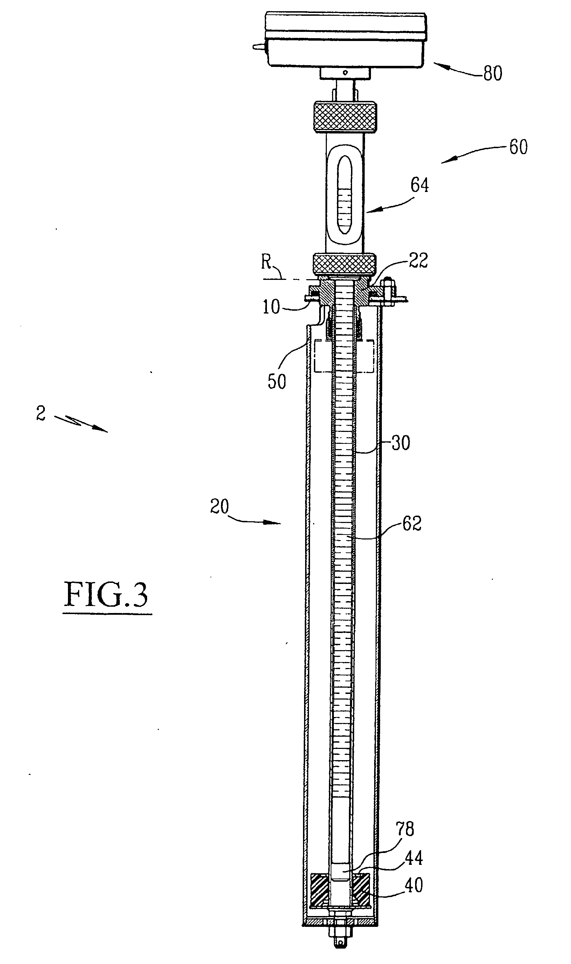

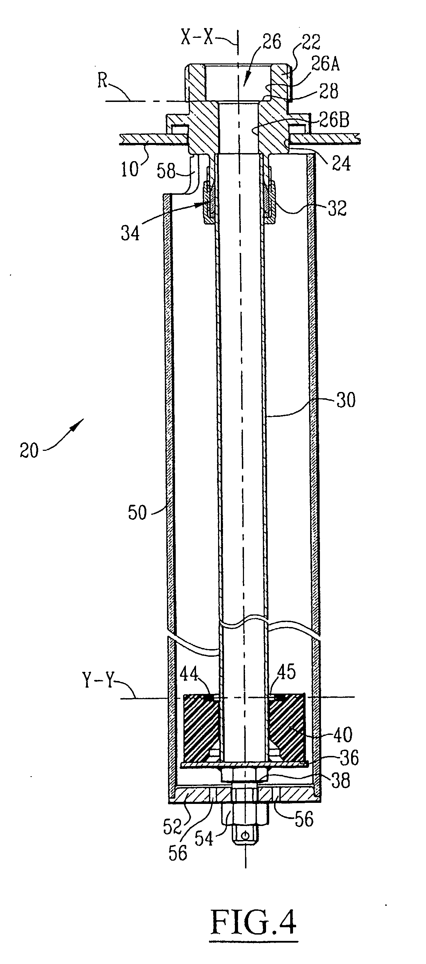

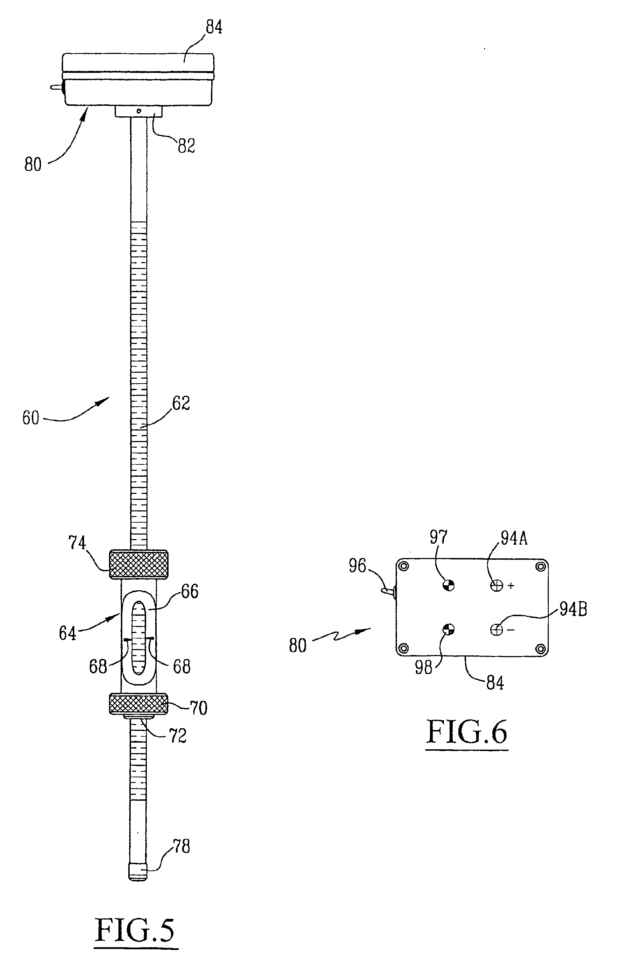

Sur la figure 3 est représenté le dispositif de repérage 2. Ce dispositif 2 est constitué de deux modules principaux, le premier étant représenté plus en détail sur la figure 4 et le second étant représenté plus en détail sur les figures 5 et 6.

Le premier module 20 est disposé à l'intérieur de la citerne 1. Plus précisément, ce module intérieur 20 est agencé sur la face intérieure du plateau 10 par l'intermédiaire d'un organe ou élément de piquage 22.

La partie supérieure de l'élément de piquage 22 s'étend à l'extérieur de la citerne 1, tandis que sa partie inférieure s'étend à l'intérieur de la citerne. Cet élément de piquage 22 est enchâssé de façon étanche à l'intérieur d'une perforation 24 préalablement ménagé dans le plateau 10. Le piquage 22 est de forme sensiblement annulaire et comporte un alésage 26 étagé 26A, 26B d'axe X-X, délimitant un épaulement 28. Cet épaulement 28 définit un plan de référence R positionné à une distance fixe et connue du plan de repérage P de la citerne 1.

Le module 20 comporte un tube 30 d'axe X-X fixé au piquage 22. Ce tube 30, par exemple en acier inoxydable, est de diamètre sensiblement égal à celui de la partie 26B de l'usinage 26. Le tube 30 est fixé sur la partie inférieure du piquage 22 au moyen d'un écrou 32 et de bagues 34. Le tube 30 est ouvert à son extrémité supérieure et est fermé à son extrémité inférieure de façon étanche par une plaque 36, au dessous de laquelle est prévu un prolongement de fixation 38. En-dehors de son utilisation, l'extrémité supérieure de l'organe de piquage 22 est pourvue d'un capuchon non représenté, adapté par exemple pour se visser sur la périphérie extérieure du piquage. Ce capuchon évite la pénétration de salissures à l'intérieur du tube 30 lorsque le dispositif 2 n'est pas utilisé.

Le module 20 comporte également un flotteur 40, monté à translation libre le long du tube 30, ce tube 30 formant un élément de guidage en déplacement du flotteur. Le flotteur peut ainsi, selon le niveau du liquide dans la citerne, se déplacer d'une position haute maximale (en traits mixtes sur la figure 3), à une position basse, la plaque 36 étant adaptée pour former un support au flotteur 40 lorsque le niveau du liquide dans la citerne 1 est suffisamment bas. Le flotteur 40 est destiné à être partiellement immergé dans le liquide de la citerne 1.

Le flotteur 40 est muni d'un aimant annulaire 44, monté dans un évidemment 45 préalablement ménagé dans la face supérieure du flotteur 40. Cet aimant 42 constitue une source de champ magnétique dont l'axe magnétique Y-Y s'étend transversalement à l'axe X-X, l'axe de révolution de l'aimant 44 étant sensiblement coaxial à l'axe X-X. Suivant l'axe de révolution de l'aimant 44, ce champ magnétique est modélisable par une fonction impaire et sensiblement nulle au-delà d'une valeur d'éloignement suivant l'axe X-X. A titre d'exemple numérique, ce champ magnétique est sensiblement nul au-delà de ± 60 mm, atteint un maximum, et respectivement un minimum, (d'environ 4 mT) à + 6 mm, respectivement -6 mm,du centre de l'aimant 44 et est nulle au centre de l'aimant. Entre ± 0,5 mm du centre de l'aimant, sa valeur varie de ± 12,5% du maximum ou du minimum.

Le module 20 comporte en outre un tube 50 de protection du flotteur 40 et du tube de guidage 30. Le tube 50 est disposé au dessous de l'élément de piquage 22 et est fermé inférieurement par une plaque 52. Le prolongement de fixation inférieure 38 du tube de guidage 30 est enfilé au travers de cette plaque 52 et solidarisé au moyen d'un organe de verrouillage 54, éventuellement plombé.

Dans la plaque 52 sont ménagés des trous 56 de circulation du liquide de la citerne 1, et dans la partie supérieure du tube de protection 50 sont ménagés des évents 58. Le tube de protection 50 est ainsi adapté pour communiquer avec la phase liquide de la citerne 1, par l'intermédiaire des trous 56, le faible diamètre de ces trous tranquilisant le niveau du liquide L à l'intérieur du tube de protection.

Le dispositif 2 comporte un second module 60, représenté seul sur la figure 5. Ce module est adapté pour être manipulé à l'extérieur de la citerne, en coopération avec le module intérieur 20.

Le module extérieur 60 comporte une tige graduée 62, par exemple de 0 à 500 mm, de classe d'exactitude II. Cette tige 62 est adaptée pour être insérée à l'intérieur de l'élément de piquage 22 depuis l'extérieur de la citerne 1.

Le module 60 comporte également un guide 64 dans lequel la tige 62 peut coulisser. Ce guide 64 est muni d'une fenêtre de lecture 66 comportant des repères 68 afin de lire la valeur de la graduation pointée par l'un de ces repères. Chaque repère 68 correspond à un type de liquide susceptible d'être transporté par la citerne 1 et introduit une correction tenant compte du fait que la profondeur d'immersion partielle du flotteur dépend de la masse volumique du liquide. Elle est par exemple d'environ 13,3 mm dans le fioul ou le gasoil, d'environ 14,7 mm dans les super et d'environ 11 mm dans l'eau. L'utilisation de ces repères sera détaillée plus loin.

Le guide 64 est pourvu à son extrémité inférieure d'un écrou 70 de verrouillage sur l'élément de piquage 22, cet écrou étant adapté pour maintenir en contact la surface 72 d'extrémité inférieure du guide 64 sur l'épaulement 28 de l'alésage 26 du piquage 22, c'est-à-dire pour maintenir cette surface d'extrémité 72 sensiblement dans le plan de référence R.

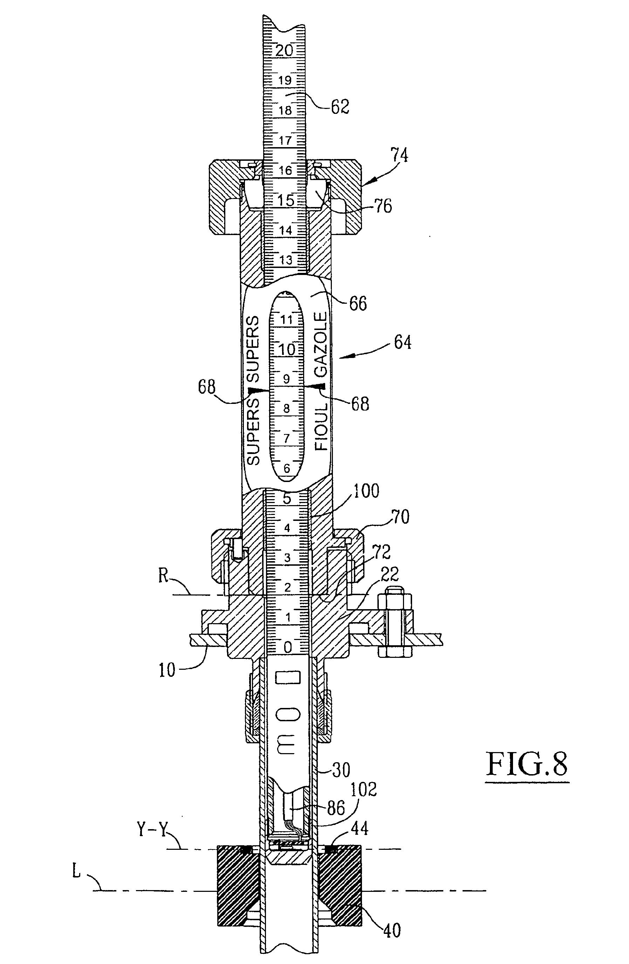

Le guide 64 est pourvu à son extrémité supérieure d'une mollette de blocage 74 du guide 64 sur la tige 62. Cette mollette 74, représentée en coupe sur la figure 8, comporte une bague conique fendue 76 enfilée librement sur la tige 62, cette bague 76 étant destinée à être pressée contre la tige lors d'un vissage suffisant du bouton fileté de la mollette 74 sur le guide 64.

A son extrémité inférieure, la tige 62 comporte un capteur 78 de champ magnétique, par exemple une sonde à effet Hall.

Le capteur 78 est relié à une unité 80 de traitement du signal délivré par ce capteur, l'unité 80 étant agencée, dans l'exemple représenté, à l'extrémité supérieure de la tige 62 au moyen d'une platine de fixation 82. Le capteur 78 est relié à l'unité 80 au moyen d'un câble 86 reçu à l'intérieur de la tige 62.

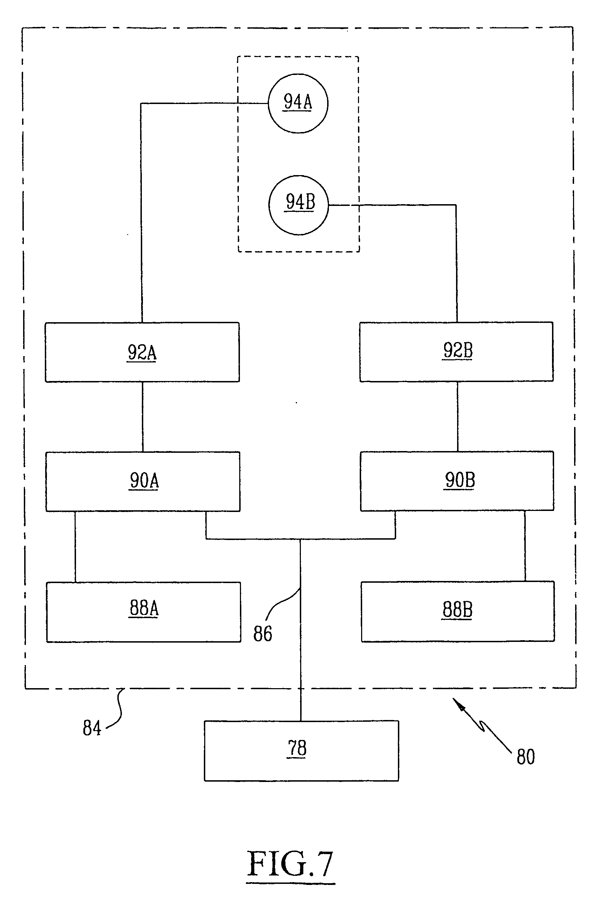

L'unité 80 comporte des composants électroniques simples, qui ne seront pas tous décrits en détail et qui sont disposés à l'intérieur d'un boîtier 84. Cette unité 80 comporte une première chaîne de traitement du signal provenant du capteur 78 par l'intermédiaire du câble 86. Cette première chaîne comprend, comme schématiquement représentée sur la figure 7 :
- un bloc 88A de fixation d'un seuil de détection,
- un bloc 90A de comparaison entre la valeur de seuil transmise par le bloc de fixation 88A et la valeur mesurée par le capteur 78,
- un bloc 92A de mise en forme et d'amplification du signal de sortie du bloc de comparaison 90A,
- un voyant lumineux 94A d'indication visuelle du signal issu du bloc de mise en forme et d'amplification 92A.

Cette première chaîne est adaptée pour commander le voyant 94A de telle sorte que ce dernier s'allume lorsque le capteur 78 mesure une intensité de champ magnétique positive et supérieure à une valeur seuil « V+ » pré-réglée par le bloc 88A.

L'unité 80 comprend une seconde chaîne de traitement du signal provenant du capteur 78, connectée au câble 86 et possédant des éléments analogues à ceux décrits ci-dessus pour la première chaîne. Les éléments de la seconde chaîne sont référencés de la même manière que ceux de la première chaîne, en substituant « A » par « B ». Cette seconde chaîne est adaptée pour commander le voyant 94B de telle sorte que ce dernier s'allume lorsque le capteur 78 mesure une intensité de champ magnétique négative et inférieure à une valeur seuil « V-» prédéterminée du bloc 88B.

Cette unité 80 comporte également un bloc d'alimentation en énergie électrique non représenté, commandé par un interrupteur 96 et relié à un voyant de mise sous tension 97. Avantageusement, l'unité 80 comporte également un bloc non représenté d'avertissement de l'insuffisance d'alimentation énergétique, au moyen d'un voyant 98 adéquat.

Le fonctionnement du dispositif 2 de repérage et de mesure de la hauteur de liquide dans la citerne 1 est le suivant. Il convient de rappeler que ce fonctionnement s'effectue sans ouverture du couvercle 12 du trou d'homme 8.

Après avoir mis le module extérieur 60 sous tension au moyen de l'interrupteur 96, on vérifie que le voyant 97 est allumé et que les voyants 94A et 94B sont éteints, ce qui indique que le capteur 78 est en fonctionnement et ne détecte aucun champ magnétique, c'est-à-dire qu'il est au « zéro magnétique ».

Après avoir retiré le capuchon précité de l'organe de piquage 22, on place le module extérieur 60 sur le module intérieur 20 ; plus précisément, on place la partie inférieure du guide 64 dans l'alésage 28 de l'élément de piquage 22, le guide 64 étant alors fixé sur le piquage 22 par verrouillage à la main de l'écrou 70. Dans cette configuration, la surface d'extrémité 72 du guide 64 est positionnée dans le plan de référence R délimitée par l'épaulement 28 de l'élément de piquage 22.

Puis on descend progressivement le tube 62 en l'enfilant, c'est-à-dire en le faisant coulisser, à l'intérieur du guide 64, de l'alésage 26 et du tube de guidage 30.

Lorsque le capteur 78 s'approche suffisamment de l'aimant 44, le voyant 94A s'allume. En effet, lorsque l'éloignement relatif entre le capteur 78 et l'aimant 44 est suffisamment petit pour que la valeur de champ magnétique mesurée par le capteur soit supérieure à la valeur seuil « V+ », le bloc de comparaison 90A émet un signal d'allumage du voyant 94A. Au fur et à mesure que la tige descend, le capteur 78 se rapproche de la source de champ magnétique 44, et l'intensité lumineuse du voyant 94A croît jusqu'à atteindre un maximum lorsque le capteur passe par le maximum de champ évoqué précédemment, et ce notamment grâce au bloc 92A de mise en forme et d'amplification du signal de sortie du bloc de comparaison 90A. Ainsi, suivant l'exemple numérique précité, lorsque le capteur 78 est à plus de 50 mm du flotteur 40, le voyant 94A reste éteint ; lorsque ce capteur est à moins de 50 mm du flotteur, le voyant 94A s'allume et son intensité croît pour passer par un maximum lorsque le capteur 78 est à environ 6 mm du flotteur ; elle décroît ensuite rapidement.

En continuant de descendre la tige 62, le voyant 94A s'éteint, indiquant alors que le capteur 78 est sensiblement aligné avec l'axe de champ magnétique Y-Y.

Si la tige 62 est descendue davantage, le voyant lumineux 94B s'allume et son intensité varie de façon symétrique à celle précédemment décrite pour le voyant 94A, le capteur 78 étant alors sensible au champ magnétique négatif généré par la source 44 au dessous du flotteur 40.

On cherche la position de la tige 62 dans laquelle à la fois les deux voyants 94A et 94B sont éteints. On bloque alors le guide 64 sur la tige 62 au moyen de la mollette 74 comme représenté sur la figure 8.

On lit ensuite la graduation pointée par le repère 68 adapté au liquide contenu dans la citerne 1, cette valeur graduée correspondant sensiblement à la valeur de déplacement de la tige 62 depuis sa position initiale par rapport au plan de référence R. Sur l'exemple de la figure 8 et pour une citerne contenant du gasoil, on lit la valeur de 90 mm.

Avantageusement, en déverrouillant le verrou 70, il est possible de retirer le module extérieur 60 sans perdre le positionnement du guide 64 sur la tige 62, de façon à lire la graduation pointée plus commodément.

Cette valeur permet d'avoir accès, au moyen d'un barème d'étalonnage pré-établi (comme il est connu dans la technique), à la « hauteur de creux » dans la citerne 1 et/ou au volume de liquide contenu dans la citerne 1.

Ainsi, le dispositif de repérage et de mesure selon l'invention permet de déterminer rapidement et commodément la hauteur du liquide dans la citerne. La conception du dispositif en un module intérieur et un module extérieur permet de diminuer fortement les coûts d'installation et de maintenance.

De plus, le dispositif est économique puisqu'il ne nécessite aucune électronique de précision, tout en conservant une excellente précision de mesure, répondant largement aux critères réglementaires imposés à ce type de dispositif.

En outre, comme la mesure de « hauteur de creux » s'effectue sans ouvrir le couvercle de trou d'homme, le dispositif selon l'invention est adapté pour équiper des citernes destinées à contenir par exemple un liquide sous une pression différente de la pression atmosphérique, ou bien par exemple des composés organiques volatils.

Dans le cas d'une citerne à plusieurs compartiments indépendants, il n'est pas nécessaire de disposer d'autant de dispositifs de repérage selon l'invention que de compartiments. En effet, chaque compartiment est équipé uniquement d'un module intérieur 20 du dispositif 2, le module extérieur 60 étant mis en oeuvre successivement pour chaque compartiment, en coopérant avec le module intérieur 20 correspondant.

Un avantage du dispositif de l'invention réside dans la possibilité d'effectuer périodiquement un contrôle de sa fiabilité. En effet, lorsque le niveau de liquide est suffisamment bas, le flotteur 40 repose sur la plaque de support 38 (position en traits pleins sur la figure 3) comme expliqué précédemment. L'alignement du capteur 78 avec l'axe de champ magnétique Y-Y survient alors pour un enfilement de la tige 62 pré-établi, comme représenté sur la figure 3. En conséquence, lorsqu'on sait que le niveau est trop bas pour être mesuré, notamment lorsque la citerne est vide, il est ainsi possible de s'assurer de la fiabilité du dispositif, par exemple que le flotteur n'est pas coincé dans une position intermédiaire, ou bien que la stabilité de fixation du module intérieur par rapport à la citerne n'est pas compromise, ou bien que les moyens de détection et d'analyse du signal fonctionnent bien.

Un autre avantage du dispositif selon l'invention réside dans la possibilité de périodiquement contrôler la fiabilité de lecture des graduations par le guide 64, en réalisant un « zéro mécanique ». Pour cela, lorsque le module extérieur 60 n'est pas agencé sur le piquage 22, le guide 64 est descendu le long de la tige 62 jusqu'à ce qu'une bague 100, insérée entre le corps du guide 64 et le tube 62 s'appuie contre l'épaulement supérieur formé par l'enveloppe 102 du capteur 78 (la bague 100 et l'enveloppe 102 sont représentées en coupe sur la figure 8). L'agencement respectif de cette bague 100 et de cette enveloppe 102 est tel que, lorsque la bague 100 est amenée en appui contre l'enveloppe 102, l'extrémité inférieure du capteur 78 est sensiblement en affleurement avec la surface 72 d'extrémité inférieure du guide 64. On s'assure alors qu'un des repères 68 est en face du zéro de la graduation de la tige 62, ce repère ayant été préalablement indiqué à l'utilisateur comme adapté pour se positionner de la sorte lorsque le module extérieur 60 est ainsi configuré.

Une variante de réalisation du dispositif selon l'invention consiste à la fois à substituer la tige graduée 62 par une tige pourvue d'au moins un repère de fonction analogue au repère 68, et à substituer la fenêtre à repères du guide 64 par une fenêtre graduée. Le fonctionnement du dispositif est analogue à celui décrit précédemment.

Une variante de la citerne équipée d'un dispositif de repérage selon l'invention consiste à ménager le piquage 22 directement sur la virole de la citerne, à condition de disposer cet organe de piquage sensiblement à la verticale de pige comme il est connu dans la technique. Un tel agencement permet de s'affranchir des plots de repérage précédemment décrits puisque ces derniers n'étaient, pour la citerne des figures 1 et 2, nécessaires que pour définir le plan de repérage P indépendamment des jeux du plateau par rapport à l'intérieur de la citerne. On comprend que l'agencement du dispositif 2 sur une paroi de la citerne non-sujette à de tels jeux, comme la virole, permet de définir le plan de repérage R de façon absolue par rapport à l'intérieur de la citerne, le barème pré-établi en tenant compte.

Des variantes de réalisation du dispositif de repérage selon l'invention sont envisageables sans sortir du cadre de l'invention. Notamment, l'indication à l'opérateur de l'information représentative du positionnement du capteur 78 par rapport à l'émetteur 44 du flotteur n'est pas limitée à une visualisation analogique sous forme de voyants à intensité lumineuse variable, mais peut être fournie, par exemple, par une visualisation numérique, ou une indication sonore.

De même, cette information n'est pas nécessairement de nature proportionnelle à la distance entre le capteur et l'émetteur comme décrit précédemment, mais peut être de nature « tout ou rien », par exemple sous forme de voyants à allumage « tout ou rien ».

Par ailleurs, divers modes de réalisation des moyens fournissant le signal représentatif de la position du flotteur le long du tube de guidage sont envisageables dans le cadre de l'invention. D'une part, l'émetteur de champ magnétique peut être remplacé par un émetteur de rayonnements électromagnétiques, par exemple une source de rayons X, le capteur à l'extrémité de la tige 62 étant adapté à la nature du signal émis depuis le flotteur. D'autre part, ces moyens fournissant le signal représentatif de la position du flotteur peuvent être adaptés pour interagir avec un signal approprié de sollicitation provenant de la tige 62. Par exemple, ces moyens comportent une pièce métallique agencée sur le flotteur et adaptée pour perturber de manière prédéterminée un champ magnétique établi par une source portée par la tige 62 ; un autre exemple consiste en ce que ces moyens comportent une surface réfléchissante, portée par le flotteur, de rayons lumineux provenant d'une source lumineuse agencée sur la tige 62. Dans tous les cas, la partie inférieure de la tige 62 comporte un capteur adapté pour détecter le signal représentatif de la position du flotteur 40 le long de la tige, ce signal étant fourni par les moyens précités, après interaction avec une sollicitation appropriée fournie par des moyens portés par la tige 62.

Enfin, bien que décrit ci-dessus pour une citerne destinée au transport routier et ferroviaire, le dispositif selon l'invention est utilisable pour tout type de citerne, ou plus généralement de récipient contenant un ou des liquides. Ainsi, le niveau d'un liquide contenu dans par exemple une citerne enterrée de station-service, extérieurement accessible en partie par un regard, est mesurable par un tel dispositif.

## Revendications

1. Dispositif de repérage du niveau d'un liquide contenu dans une citerne, du type comportant à la fois un module intérieur (20) disposé à l'intérieur de la citerne (1), ledit module comprenant un tube de guidage (30) agencé sur la face intérieure de la zone supérieure de la citerne, fermé à son extrémité inférieure et ouvert sur l'extérieur de la citerne à son extrémité supérieure, et un flotteur (40) monté à translation libre sur le tube de guidage (30) et muni de moyens (44) adaptés pour fournir un signal représentatif de la position du flotteur le long du tube de guidage ; et un module extérieur (60) comprenant d'une part une tige (62) adaptée pour être enfilée à l'intérieur du tube de guidage (30) et munie à son extrémité inférieure d'un capteur (78) de détection dudit signal, et d'autre part un guide (64) de coulissement de la tige (62),
**caractérisé en ce qu'**il comporte en outre un organe de piquage (22) qui est monté de façon étanche au travers de la paroi de la citerne (1) et qui est pourvu d'un alésage (26) délimitant un plan de référence (R) par rapport à la citerne et adapté à la fois pour recevoir en partie le guide (64) de manière amovible et pour y enfiler la tige (62),
et **en ce que** le module extérieur (60) comprend en outre une unité (80) de détermination de la position du capteur par rapport au flotteur (40), ladite unité étant reliée au capteur (78),
le module extérieur étant amovible (60) par rapport à l'organe de piquage (22) de sorte que, en fonctionnement, son guide (64) est adapté pour être en partie placé dans l'alésage de l'organe de piquage, jusqu'à être positionné par rapport audit plan de référence (R) pour la mesure du niveau du liquide (L) contenu dans la citerne (1).

2. Dispositif suivant la revendication 1, **caractérisé en ce que** le guide (64) comporte un organe (70) de fixation amovible sur l'organe de piquage (22).

3. Dispositif suivant la revendication 2, **caractérisé en ce que** l'organe de fixation amovible (70) est à même d'être successivement verrouillé sur l'organe de piquage (22) pour positionner fixement le guide (64) par rapport au plan de référence (R), et déverrouillée pour retirer le module extérieur (60) de l'organe de piquage.

4. Dispositif suivant l'une quelconque des revendications précédentes, **caractérisé en ce que** le guide (64) comporte une mollette (74) de serrage du guide sur la tige (62).

5. Dispositif suivant l'une quelconque des revendications précédentes, **caractérisé en ce que** le module intérieur (20) comporte un organe tubulaire (50) de protection du flotteur (40), fixé sur le tube de guidage (30) et pourvu à la fois d'au moins un évent (58) dans sa partie supérieure et d'au moins un trou (56) de circulation du liquide dans sa partie inférieure, ledit organe de protection (50) étant adapté pour tranquilliser le liquide dans la zone de positionnement du flotteur (40) le long du tube de guidage (30).

6. Dispositif suivant l'une des revendications précédentes, **caractérisé en ce que** le tube de guidage (30) est fixé sur l'organe de piquage (22).

7. Dispositif suivant l'une des revendication précédentes, **caractérisé en ce que** la tige (62) est graduée, et **en ce que** le guide (64) de coulissement de la tige (62) est pourvu d'une fenêtre (66) et d'au moins un repère (68) de lecture des graduations de la tige.

8. Dispositif suivant l'une des revendications 1 à 6, **caractérisé en ce que** le guide de coulissement de la tige est pourvu d'une graduation, et **en ce que** la tige est pourvue d'au moins un repère de lecture de la graduation du guide.

9. Dispositif suivant l'une des revendications 7 ou 8, **caractérisé en ce que** le module extérieur (60) comporte plusieurs repères de lecture (68), chaque repère étant utilisable pour la mesure du niveau d'un type de liquide.

10. Dispositif suivant l'une des revendications précédentes, **caractérisé en ce que** les moyens fournissant le signal représentatif de la position du flotteur (40) le long du tube de guidage (30) comportent un émetteur (44) dudit signal.

11. Dispositif suivant la revendication 10, **caractérisé en ce que** ledit émetteur (44) est constitué d'une source de champ magnétique.

12. Dispositif suivant l'une des revendications 1 à 9, **caractérisé en ce que** les moyens (44) fournissant le signal représentatif de la position du flotteur (40) le long du tube de guidage (30) comportent un organe adapté pour interagir avec une sollicitation fournie par des moyens appropriés portés par la tige (62).

13. Dispositif suivant l'une des revendications précédentes, **caractérisé en ce que** l'unité de détermination de la position du capteur (78) par rapport au flotteur (40) est constituée d'une unité (80) de traitement du signal de sortie du capteur.

14. Dispositif suivant la revendication 13, **caractérisé en ce que** ladite unité (80) comporte au moins une chaîne de blocs comprenant un bloc (90A, 90B) de comparaison entre le signal de sortie du capteur (78) et une valeur seuil (V+, V-) prédéterminée, un bloc (92A, 92B) de mise en forme du signal de sortie du bloc de comparaison, et un moyen (94A, 94B) de visualisation du signal de sortie du bloc de mise en forme.

15. Citerne, **caractérisée en ce qu'**elle comporte un dispositif (2) de repérage du niveau d'un liquide contenu dans la citerne (1) suivant l'une des revendications précédentes.

16. Citerne suivant la revendication 15, **caractérisée en ce qu'**elle comporte plusieurs compartiments indépendants, et **en ce que** chaque compartiment est équipé d'un module intérieur (20), coopérant chacun avec le même module extérieur amovible (60).

## Claims

1. A device for detecting the level of a liquid contained in a tank, of the type comprising both an inner module (20) arranged inside the tank (1), said module including a guide tube (30) arranged on the inner surface of the upper area of the tank, closed at its lower end and open to the outside of the tank at its upper end, and a float (40) mounted freely translating on the guide tube (30) and provided with a means (44) adapted to provide a signal representative of the position of the float among the guide tube; and an outer module (60) on the one hand including a rod (62) adapted to be slid inside the guide tube (30) and the lower end of which is provided with a sensor (78) for detecting said signal, and on the other hand a guide (64) for the sliding of the rod (62),
**characterized in that** it also comprises a bleed member (22) that is sealably mounted to the wall of the tank (3) and is provided with a bore (26) defining a reference plane (R) in reflation to the tank and adapted both to partially receive the guide (64) removable and to slide the rod (62) therein,
and **in that** the outer nodule (60) also includes a unit (80) for determining the position of the sensor in relation to the float (40), said unit being connected to the sensor (78),
the outer module being removable (60) in relation to the bleed member (22) such that, during operation, its guide (64) is adapted to be partially placed in the bore of the bleed member, until it is in position in relation to said reference plane (R) to measure the level of the liquid (L) contained in the tank (1).

2. The device according to claim 1, **characterized in that** the guide (64) comprises a member (70) for removable fastening on the bleed member (22).

3. The device according to claim 2, **characterized in that** the removable fastening member (70) can be successively locked on the bleed member (22) to position the guide (64) securely in reflation to the reference plane (R), and unblocked to remove the outer module (60) from the bleed member.

4. The device according to any one of the preceding claims, **characterized in that** the guide (64) comprises a handle (74) for gripping the guide on the rod (62).

5. The device according to any one of the preceding claims, **characterized in that** the inner module (20) comprises a tubular member (50) for protecting the float (40), fastened on the guide tube (30) and provided both with at least one vent (58) in its upper portion and at least one hole (56) for circulation of the liquid in its lower portion, said protection member (50) being adapted to call the liquid in the positioning area of the float (40) along the guide tube (30)

6. The device according to any one of the preceding claims, **characterized in that** the guide tube (30) is fastened on the bleed member (22).

7. The device according to any one of the preceding claims, **characterized in that** the rod (62) is graduated, and **in that** the guide (64) for the sliding of the rod (62) is provided with a window (66) and at least one reference (68) for reading the scale marks of the rod.

8. The device according to any one of claims 1 to 6, **characterized in that** the guide for the sliding of the rod is provided with a scale, and **in that** the rod is provided with at least one reference for reading the scale of the guide.

9. The device according to any one of claims 7 or 8, **characterized in that** the outer module (60) comprises several reading references (68), each reference being usable to measure the level of a type of liquid.

10. The device according to any one of the preceding claims, **characterized in that** the means providing the signal representative of the position of the float (40) along the guide tube (30) comprises a transmitter (44) for said signal.

11. The device according to claim 10, **characterized in that** said transmitter (44) is made up of a magnetic field source.

12. The device according to one of claims 1 to 9, **characterized in that** the means (44) providing the signal representative of the position of the float (40) along the guide tube (30) comprises a member adapted to interact with a bias provided by suitable means carried by the rod (62).

13. The device according to one of the preceding claims, **characterised in that** the unit for determining the position of the sensor (78) in relation to the float (40) is made up of a unit (80) for processing the output signal of the sensor.

14. The device according to claim 13, **characterized in that** said unit (80) comprises at least one chain of blocks including a block (90A, 90B) for making a comparison between the output signal from the sensor (78) and a predetermined threshold value (V+, V-), a block (92A, 928) for shaping the output signal from the comparison block, and a means (94A, 94B) for viewing the output signal from the shaping block

15. A tank, **characterized in that** it comprises a device (2) for detecting the level of a liquid contained in the tank (1) according to one of the preceding claims.

16. The tank according to claim 15, **characterized in that** it comprises several independent compartments, and **in that** each compartment is equipped with an inner module (20), each cooperating with the same removable outer module (60).

## Patentansprüche

1. Vorrichtung zur Teststellung des Stands einer Flüssigkeit in einem Tank der Bauart, die sowohl ein inneres Modus (20) aufweist, das im Tank (1) angeordnet ist, wobei das Modul ein Führungsrohr (30) umfasst, das an der Innenseite der oberen Zone des Tanks ausgebildet, an seinem unteren Ende geschlossen und außerhalb des Tanks an seinem oberen Ende geöffnet ist, und einen Schwimmer (40), der frei verlagerbar auf dem Führungsrohr (30) montiert und mit Mittein (44) ausgestattet ist, die geeignet sind, um ein für die Position des Schwimmers entlang des Führungsrohrs repräsentatives Signal zu liefern, und ein äußeres Modul (60), das einerseits eine Stange (62) umfasst, die geeignet ist, um in das Führungsrohr (30) eingefädelt zu sein und an ihrem unteren Ende mit einem Detektionssensor (78) des Signals ausgestattet ist und andererseits eine Gleitführung (64) der Stange (62),
**dadurch gekennzeichnet, dass** sie ferner ein Stechorgan (22) aufweist, das durch die Wand des Tanks (1) dicht montiert ist und das mit einer Bohrung (26) verstehen ist, die im Verhältnis zum Tank (1) eine Bezugsebene (R) begrenzt und sowohl geeignet ist, um die Führung (64) teilweise derart aufzunehmen, dass sie demontierbar ist und um dort die Stange (62) einzufädein,
und dass das äußere Modul (60) ferner eine Einheit (80) zum Bestimmen der Position des Sensors im Verhältnis zum Schwimmer (40) umfasst, wobei die Einheit mit dem Sensor (78) verbunden ist,
wobei das äußere Modul (60) im Verhältnis zum Stechorgan (22) derart demontierbar ist, dass seine Führung (64) im Betrieb geeignet ist, um teilweise in der Bohrung des Stechorgans platziert zu sein, bis eine im Verhältnis zur Bezugsebene (R) zum Messen des Stands der in dem Tank (1) enthaltenen Flüssigkeit (L) Position erreicht ist.

2. Vorrichtung nach Anspruch 1, **dadurch gekennzeichnet, dass** die Führung (64) ein demontierbares Befestigungsorgan (70) auf dem Stechorgan (22) aufweist.

3. Vorrichtung nach Anspruch 2, **dadurch gekennzeichnet, dass** das demontierbare Befestigungsorgan (70) imstande ist, schrittweise auf dem Stechorgan (22) verriegelt zu sein, um die Führung (64) im Verhältnis zur Bezugsebene (R) fest zu positionierten, und entriegelt zu sein, um das äußere Modul (60) vom Stechorgan zu entfernen.

4. Vorrichtung nach einem der vorangehenden Ansprüche, **dadurch gekennzeichnet, dass** die Führung (64) ein Befestigungs-Rändelrad (74) der Führung auf der Stange (62) aufweist.

5. Vorrichtung nach einem der vorangehenden Ansprüche, **dadurch gekennzeichnet, dass** das innere Modul (20) ein rohrförmiges Schutzorgan (50) des Schwimmers (40) aufweist, das auf dem Führungsrohr (30) befestigt ist und sowohl mit mindestens einem Lüftungsloch (58) in seinem oberen Abschnitt und mit mindestens einem Zirkulationsloch (56) der Flüssigkeit in seinem unteren Abschnitt ausgestattet ist, wobei das Schutzorgan (50) geeignet ist, um die Flüssigkeit in der Zone der Positionierung des Schwimmers (40) entlang des Führungsrohrs (30) zu beruhigen.

6. Vorrichtung nach einem der vorangehenden Ansprüche, **dadurch gekennzeichnet, dass** das Führungsrohr (30) auf dem Stechorgan (22) befestigt ist.

7. Vorrichtung nach einem der vorangehenden Ansprüche, **dadurch gekennzeichnet, dass** die Stange (62) eine Skala hat und dass die Gleitführung (64) der Stange (62) mit einem Fenster (66) und mindestens einem Ablesebezugspunkt (68) der skalierungen der Stange ausgestattet ist.

8. Vorrichtung nach einem der Ansprüche 1 bis 6, **dadurch gekennzeichnet, dass** die Gleitführung der Stange mit einer Skala ausgestattet ist und dass die Stange mit mindestens einem Ablesebezugspunkt der Skalierung der Führung ausgestattet ist.

9. Vorrichtung nach einem der Anspruche 7 oder 8, **dadurch gekennzeichnet, dass** das äußere modul (60) mehrere Ablesebezugspunkte (68) aufweist, wobei jeder Bezugspunkt für das Messen des Stands einer Flüssigkeitsart verwendbar ist.

10. Vorrichtung nach einem der vorangehenden Ansprüche, **dadurch gekennzeichnet, dass** die Mittel, die das für die Position des Schwimmers (40) entlang des Führungsrohrs (30) repräsentative Signal liefern, einen Sender (44) des Signals aufweisen.

11. Vorrichtung nach Anspruch 10, **dadurch gekennzeichnet, dass** der Sender (44) von einer Magnetfeldquelle gebildet wird.

12. Vorrichtung nach einen der Ansprüche 1 bis 9, **dadurch gekennzeichnet, dass** die Mittel (44), die das für die Position des Schwimmers (40) entlang des Führungsrohrs (30) repräsentative Signal liefern, ein Organ aufweisen, das geeignet ist, um mit einer Beanspruchung zu interagieren, die von geeigneten Mittel geliefert wird, die von der Stange (62) getragen werden.

13. Vorrichtung nach einem der vorangehenden Anspruche, **dadurch gekennzeichnet, dass** die Einheit zur Bestimmung der Position des Sensors (78) im Verhältnis zum Schwimmer (40) aus einer Verarbeitungseinheit (80) des Ausgangssignals des Sensors besteht.

14. Vorrichtung nach Anspruch 13, **dadurch gekennzeichnet, dass** die Einheit (80) mindestens eine Kette von Blöcken aufweist, die einen Vergleichsblock (90A, 90B) zwischen dem Ausgangssignal des Sensors (78) und einem vorbestimmten Schwellenwert (V+, V-) umfasst, einen Gestaltungsblock (92A, 92B) des Ausgangssignals des Vergleichsblocks und ein Visualisierungsmittel (94A, 94B) des Ausgangssignals des Gestaltungsblocks.

15. Tank, **dadurch gekennzeichnet, dass** er eine Vorrichtung (2) zur Feststellung des Stands einer in dem Tank (1) enthaltenen Flüssigkeit nach einem der vorangehenden Ansprüche aufweist.

16. Tank nach Anspruch 15, **dadurch gekennzeichnet, dass** er mehrere unabhängige Anteile aufweist und dass jedes Abteil mit einem inneren Modul (20) ausgestattet ist, das jeweils mit demselben demontierbaren äußeren Modul (60) zusammenarbeitet.
